# EUROPÄISCHE PATENTSCHRIFT

(11) **EP 3 452 320 B1**
(45) Veröffentlichungstag und Bekanntmachung des Hinweises auf die Patenterteilung: **27.05.2020**
(21) Anmeldenummer: 17720079.7
(22) Anmeldetag: 26.04.2017
(51) Int. Cl.: B60J 7/047, B60J 7/02

(54) **ANORDNUNG FÜR EIN FAHRZEUGDACH**
ASSEMBLY FOR A VEHICLE ROOF
ENSEMBLE POUR TOIT DE VÉHICULE

(30) Priorität: 02.05.2016 DE 102016108092
(43) Veröffentlichungstag der Anmeldung: 13.03.2019
(73) Patentinhaber: Webasto SE, 82131 Stockdorf (DE)
(72) Erfinder: RIPA, Thomas, 82211 Herrsching (DE); LIPOVSKY, Christian, 80809 München (DE)
(74) Vertreter: Epping - Hermann - Fischer
(86) Internationale Anmeldenummer: PCT/EP2017/059857
(87) Internationale Veröffentlichungsnummer: WO 2017/190996

(56) Entgegenhaltungen:
- WO-A1-2013/160183
- DE-A1- 3 801 881
- DE-A1- 10 133 436

## Beschreibung

Die Erfindung betrifft eine Anordnung für ein Fahrzeugdach, insbesondere eine Anordnung mit zwei bewegbaren Deckeln, die jeweils ausgehend von einer Schließstellung zum Öffnen mittels zugeordneten Hebelmechaniken anhebbar und in eine Öffnungsrichtung in eine Offenstellung verschiebbar sind.

Anordnungen mit einem bewegbaren Deckel für ein Fahrzeugdach sind beispielsweise als Spoilerdächer ausgeführt, wie in der DE 10 2011 018 151 A1 beschrieben. Bei den sogenannten Spoilerdächern wird an einer in der Öffnungsrichtung hinteren Kante zunächst ein Ausstellhebel verdreht, um die Hinterkante des Deckels anzuheben. Nachfolgend wird der Deckel relativ zu dem Ausstellhebel in die Öffnungsrichtung verschoben. Der Ausstellhebel wird dabei relativ zum übrigen Fahrzeugdach festgehalten und nicht in die Öffnungsrichtung verschoben.

Anders ist dies beispielsweise bei sogenannten außengeführten Schiebedächern, bei denen der Ausstellhebel an der hinteren Kante des Deckels zusammen mit dem Deckel relativ zum übrigen Fahrzeugdach in die Öffnungsrichtung verschoben wird.

Es ist wünschenswert, eine Anordnung für ein Fahrzeugdach anzugeben, die zwei bewegbare Deckel ermöglicht und dabei einen geringen Bauraumbedarf hat. Fahrzeugdächer mit zwei bewegbaren Deckeln sind z.B. bekannt aus DE 101 33 436 A1, WO 2013/160183 A1 und DE 38 01 881 A1.

Gemäß einer Ausführungsform der Erfindung weist eine Anordnung für ein Fahrzeugdach einen ersten Deckel mit einem Deckelträger auf. Die Anordnung weist einen zweiten Deckel mit einem zweiten Deckelträger auf. Der zweite Deckel ist in einer Schließposition in einer ersten Richtung hinter dem ersten Deckel angeordnet.

Die Schließposition ist die Position, in der die beiden Deckel eine Dachöffnung in dem Fahrzeugdach verschließen. Die erste Richtung entspricht einer Öffnungsrichtung der Anordnung, in die die Deckel zum Freigeben der Dachöffnung verschiebbar sind.

Die Anordnung weist eine Führungsschiene mit einem Führungskanal auf. Der erste und der zweite Deckel sind jeweils entlang der ersten Richtung relativ zu der Führungsschiene verschiebbar. Somit ist es möglich, die Deckel aus der Schließposition zunächst in eine sogenannte Lüfterstellung und dann in eine Offenstellung zu bewegen.

Der erste Deckelträger weist an einem dem zweiten Deckel abgewandten Ende einen ersten Gleiter auf. Der erste Gleiter ist in dem Führungskanal der Führungsschiene geführt. Der zweite Deckelträger weist an einem dem ersten Deckel zugewandten ersten Ende einen Hebel auf. Der Hebel weist einen zweiten Gleiter auf. Der zweite Gleiter ist in dem Führungskanal geführt. Der Hebel ist relativ zu dem zweiten Deckelträger bewegbar.

Der erste Gleiter des ersten Deckelträgers und der zweite Gleiter des Hebels sind in dem gleichen Führungskanal der Führungsschiene geführt. Der zweite Gleiter ist an dem Hebel angeordnet, der insbesondere entlang einer dritten Richtung relativ zum zweiten Deckelträger bewegbar ist. Die dritte Richtung entspricht in einem normalen Betriebszustand eines Fahrzeugs der Vertikalen. Durch die Bewegbarkeit des Hebels relativ zum zweiten Deckelträger ist es möglich, den Deckelträger entlang der dritten Richtung relativ zu der Führungsschiene zu bewegen, um den zweiten Deckel auszustellen und in die Offenposition zu verschieben. Dabei ist der zweite Gleiter stets in dem Führungskanal geführt. In dem Führungskanal müssen insbesondere keine Anhebekulissen oder ähnliches für den zweiten Gleiter vorgesehen sein, die von dem ersten Gleiter des ersten Deckelträgers überfahren werden müssten. Der zweite Gleiter des Hebels wird in dem für den ersten Gleiter vorhandenen Führungskanal seitlich geführt und hält den zweiten Deckelträger während dem Verschieben nach oben in die dritte Richtung.

Gemäß weiteren Ausführungsformen weist der zweite Deckelträger an dem ersten Ende einen dritten Gleiter auf, der an einer dem Führungskanal zugewandten Seite des zweiten Deckelträgers angeordnet ist. Mittels des dritten Gleiters ist es möglich, eine Bewegung des zweiten Deckelträgers relativ zu der Führungsschiene zu führen. Insbesondere ist der zweite Deckelträger mittels des dritten Gleiters entlang der dritten Richtung relativ zu der Führungsschiene verschiebbar. Der zweite Gleiter und der dritte Gleiter sind relativ zueinander bewegbar.

Gemäß weiteren Ausführungsformen weist die Führungsschiene eine Führungsschulter auf. Der dritte Gleiter ist zumindest abschnittsweise auf der Führungsschulter geführt. Die Führungsschulter und der Führungskanal sind entlang einer zweiten Richtung seitlich versetzt zueinander angeordnet. Die zweite Richtung entspricht in einer normalen Betriebsposition des Fahrzeugs der Horizontalen quer zur Hauptfahrtrichtung des Fahrzeugs.

Gemäß weiteren Ausführungsformen weist die Führungsschiene eine Anhebekulisse für den dritten Gleiter auf. Die Anhebekulisse ist an einem dem ersten Deckel zugewandten Ende der Führungsschulter angeordnet. Mittels der Anhebekulisse ist es möglich, den zweiten Deckelträger ausgehend von der Schließposition an dem ersten Ende relativ zu der Führungsschiene in die dritte Richtung anzuheben. Die Anhebekulisse ist seitlich vom Führungskanal angeordnet. Somit sind der Führungskanal für den ersten Gleiter und den zweiten Gleiter entkoppelt von der Anhebekulisse und der Führungsschulter für den dritten Gleiter.

Der Führungskanal ist in einem Bereich der Führungsschiene ausgebildet, der herkömmlich bereits zum Befestigen der Führungsschiene an der Fahrzeugkarosserie genutzt wird. Daher ist für die seitlich versetzte Anordnung der Führungsschulter und des Führungskanals kein zusätzlicher Bauraum entlang der zweiten Richtung notwendig.

Die Anhebekulisse weist gemäß weiteren Ausführungsformen einen Vorsprung auf, der in die dritte Richtung über die Führungsschulter vorspringt, um den dritten Gleiter bei einer Bewegung entgegen der ersten Richtung in die Anhebekulisse zu führen. Der Vorsprung der Anhebekulisse gewährleistet ein sicheres Absenken des dritten Gleiters in die Anhebekulisse bei einer Bewegung des zweiten Deckelträgers von der Offenposition in die Schließposition. Aufgrund der seitlich versetzten Anordnung der Führungsschulter und des Führungskanals beeinträchtigt der Vorsprung der Anhebekulisse nicht die Führung des ersten Gleiters und des zweiten Gleiters in dem Führungskanal.

Gemäß weiteren Ausführungsformen sind der zweite Gleiter und der dritte Gleiter in einem ersten Zustand in Kontakt zueinander und weisen eine gemeinsame Kontaktfläche auf. In einem zweiten Zustand sind der zweite Gleiter und der dritte Gleiter beanstandet voneinander angeordnet. Durch die Bewegbarkeit des Hebels relativ zum Deckelträger ist es auch möglich, den zweiten und den dritten Gleiter relativ zueinander zu bewegen. Wenn der dritte Gleiter in der Anhebekulisse geführt ist, ist er beabstandet von dem zweiten Gleiter angeordnet. Während der Bewegung des zweiten Deckelträgers in die erste Richtung bewegt sich der zweite Gleiter in Richtung des dritten Gleiters. Der dritte Gleiter ragt von dem Deckelträger beziehungsweise von dem Hebel über die Führungsschulter in den Führungskanal. Daher ist es möglich, dass der dritte Gleiter im Bereich der Führungsschulter in Kontakt mit dem zweiten Gleiter gerät. Der Kontakt zwischen dem zweiten Gleiter und dem dritten Gleiter stabilisiert die Anordnung, wenn der zweite Deckel aus seiner Schließposition bewegt ist. Eine weitere Relativbewegung zwischen dem zweiten Gleiter und dem dritten Gleiter in dem ersten Zustand wird vermieden.

Gemäß weiteren Ausführungsformen weist der Hebel einen vierten Gleiter auf, der auf einer dem Führungskanal abgewandten Seite des Hebels angeordnet ist. Der zweite Deckelträger benötigt nur einen einzigen Gleiter an dem ersten Ende, nämlich den dritten Gleiter. Der Hebel ist beidseitig des zweiten Deckelträgers in der Führungsschiene geführt und weist hierfür den zweiten und den vierten Gleiter auf.

Gemäß Ausführungsformen ist der Hebel relativ zum zweiten Deckelträger um eine Drehachse verschwenkbar. Gemäß weiteren Ausführungsformen ist eine andere Relativbewegung zwischen dem Hebel und dem zweiten Deckelträger möglich, beispielsweise eine Linearbewegung entlang der dritten Richtung.

Gemäß weiteren Ausführungsformen sind Wände der Führungsschiene, die den Führungskanal entlang der dritten Richtung nach oben und unten begrenzen, durchgängig. Zumindest in dem Bereich, in dem der erste Gleiter und der zweite Gleiter geführt sind, weist der Führungskanal nach unten entgegen der dritten Richtung keine Öffnungen auf, insbesondere keine Öffnung, die so groß ist wie oder größer als der erste Gleiter oder der zweite Gleiter. Der erste und der zweite Gleiter sind somit verlässlich in dem Führungskanal geführt. Ein unbeabsichtigtes Abtauchen beispielsweise in eine Anhebekulisse ist somit vermeidbar. Gemäß Ausführungsformen sind die Wände, die den Führungskanal umgeben, zumindest in dem Bereich, in dem der erste und der zweite Gleiter geführt sind, ununterbrochen. Gemäß weiteren Ausführungsformen ist die Führungsschiene so ausgestaltet, dass die Führungsschulter entgegen der dritten Richtung von oben zugänglich ist. Von oben zugänglich bedeutet insbesondere, dass kein Element der Führungsschiene entlang der dritten Richtung die Führungsschulter von oben verdeckt. Im betriebsfertigen Zustand können andere Elemente des Fahrzeugs die Führungsschulter von oben bedecken. Durch die Zugänglichkeit der Führungsschulter von oben ist es platzsparend möglich, den Führungskanal und die Führungsschulter seitlich versetzt zueinander anzuordnen und den Hebel mittels des zweiten Gleiters in dem beabstandeten Führungskanal zu führen.

Die Führungsschulter ist insbesondere zwischen dem zweiten Deckelträger und dem zweiten Gleiter angeordnet.

Gemäß weiteren Ausführungsformen weist der Deckelträger ein vorspringendes Element auf. Das vorspringende Element ist entlang der dritten Richtung beabstandet zu der Führungsschulter. Das vorspringende Element erstreckt sich entlang der zweiten Richtung über die Führungsschulter. Der erste Gleiter ist an dem vorspringenden Element angeordnet. Somit ist es möglich, dass der erste Deckelträger beim Öffnen des ersten Deckels von dem ersten Gleiter in dem Führungskanal geführt ist. Das vorspringende Element überbrückt die Führungsschulter und gegebenenfalls die Anhebekulisse, sodass der erste Gleiter an der Anhebekulisse vorbeifährt.

Weitere Vorteile, Merkmale und Weiterbildungen ergeben sich aus den nachfolgenden in Verbindung mit den Figuren erläuterten Ausführungsbeispielen. Gleiche, gleichartige oder gleich wirkende Elemente können figurenübergreifend mit den gleichen Bezugszeichen versehen sein.

Es zeigen:
- Figur 1: eine schematische Ansicht eines Fahrzeugdachs gemäß einer Ausführungsform,
- Figuren 2A und 2B: eine schematische Ansicht einer Anordnung in zwei unterschiedlichen Zuständen gemäß einer Ausführungsform,
- Figur 3: eine schematische Darstellung eines ersten Deckelträgers gemäß einer Ausführungsform,
- Figur 4: eine schematische Darstellung eines zweiten Deckelträgers gemäß einer Ausführungsform,
- Figuren 5A und 5B: jeweils eine schematische Darstellung eines Querschnitts der Anordnung,
- Figur 6: eine schematische Darstellung eines Ausschnitts der Anordnung gemäß einer Ausführungsform,
- Figur 7: eine schematische Darstellung des Ausschnitts gemäß eines weiteren Zustands der Anordnung, und
- Figur 8: eine schematische Darstellung eines weiteren Zustands.

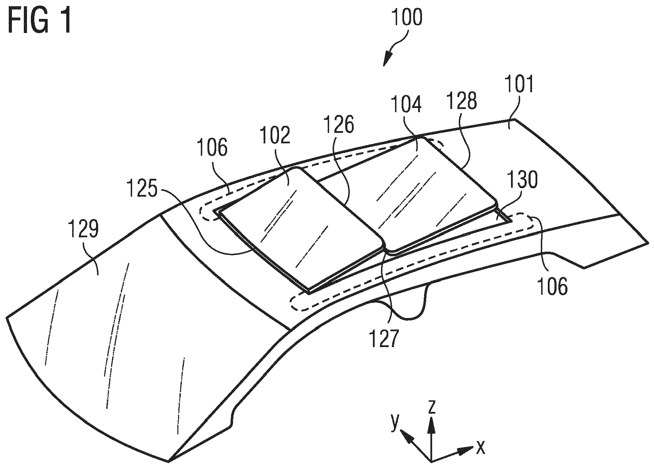

Figur 1 zeigt ein Fahrzeugdach 101 eines Kraftfahrzeugs. Das Fahrzeugdach 101 weist eine Anordnung 100 auf. In normaler Betriebsposition vorne ist eine Windschutzscheibe 129 angeordnet. Das Fahrzeugdach 101 erstreckt sich insbesondere entlang einer ersten Richtung x ausgehend von der Windschutzscheibe 129.

Das Fahrzeugdach 101 weist eine Dachöffnung 130 auf. Die Dachöffnung 130 ist durch einen ersten Deckel 102 und einen zweiten Deckel 104 der Anordnung 100 verschließbar. Durch eine Bewegung der beiden Deckel 102 und 104 relativ zu dem übrigen Fahrzeugdach 101 ist die Dachöffnung 130 zumindest teilweise freigebbar. Der erste Deckel 102 und der zweite Deckel 104 sind jeweils insbesondere nach Art eines sogenannten Spoilerdachs ausgeführt. Bevorzugt handelt es sich bei der Anordnung um eine Anordnung eines Doppelspoiler- oder Zweideckel-Spoilerdaches, wobei sowohl der erste Deckel als auch der zweite Deckel über das Fahrzeugdach nach hinten verschiebbar sind. Zum Anheben der jeweiligen Hinterkanten 126 und 128 ist jeweils ein Ausstellhebel vorgesehen. Beim Verschieben des ersten Deckels 102 und/oder des zweiten Deckels 104 in die erste Richtung x weg von der Windschutzscheibe 129 wird der jeweilige Ausstellhebel zunächst ortsfest zu einer Führungsschiene 106 gehalten und bewegt sich nicht zusammen mit dem jeweils zugeordneten Deckel in die erste Richtung x. Der Deckel 102 beziehungsweise 104 wird jeweils relativ zu dem zugeordneten Ausstellhebel verschoben.

Die Anordnung 100 weist die Führungsschiene 106 auf. Im Fahrzeugdach 101 sind entlang der ersten Richtung x beidseitig der Dachöffnung 130 Führungsschienen 106 und weitere Elemente angeordnet, wie in den nachfolgenden Figuren erläutert. Da die Führungsschienen 106 und die Mechaniken beidseitig der Dachöffnung 130 korrespondierend ausgebildet sind, wird nur eine Seite unter Bezugnahme auf die nachfolgenden Figuren erläutert.

Der erste Deckel 103 weist eine Vorderkante 125 auf, die der Windschutzscheibe 129 zugewandt ist. Der zweite Deckel 104 weist eine Vorderkante 127 auf, die der Windschutzscheibe 129 zugewandt ist.

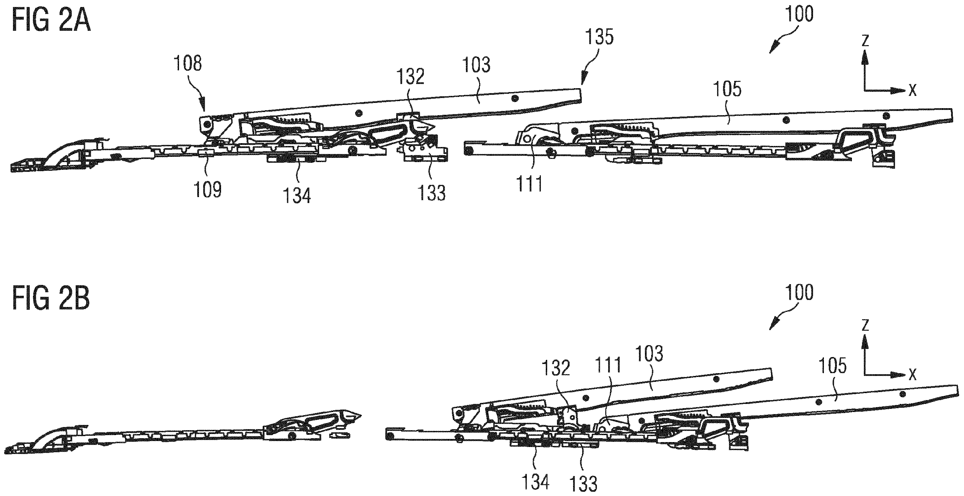

Figuren 2A und 2B zeigen die Anordnung 100 in verschiedenen Betriebszuständen. Figur 2A zeigt die Anordnung 100 in einem Zustand, in dem der erste Deckel 102 und der zweite Deckel 104 jeweils in ihrer Lüfterstellung positioniert sind, ähnlich wie in Figur 1 dargestellt. Figur 2B zeigt die Anordnung 100 in einer Offenposition, in der die beiden Deckel 102 und 104 in ihrer maximal in die erste Richtung x verschobenen Position dargestellt sind und die Dachöffnung 130 soweit wie möglich freigegeben ist.

Die Anordnung 100 weist einen ersten Deckelträger 103 auf, mit dem der erste Deckel 102 gekoppelt ist. Ein zweiter Deckelträger 105 ist mit dem zweiten Deckel 104 gekoppelt. In die erste Richtung x ist der erste Deckelträger 103 vor dem zweiten Deckelträger 105 angeordnet. Die Deckelträger 103 und 104 dienen jeweils zur Kopplung der zugeordneten Deckel 102 und 104 mit der Ausstellmechanik zur Bewegung der jeweiligen Deckel und der Führungsschiene 106.

Ein Antriebsschlitten 134 ist mittels eines Antriebskabels mit einem Antrieb gekoppelt, beispielsweise mit einem Elektromotor. Zum Bewegen der beiden Deckel 102 und 104 ausgehend von der Schließstellung wird gemäß Ausführungsbeispielen der Antriebsschlitten 134 in die erste Richtung x bewegt. Gemäß weiteren Ausführungsbeispielen ist ein erster Elektromotor für den ersten Deckel 102 vorgesehen und ein separater zweiter Elektromotor zum Bewegen des zweiten Deckels 104.

Zunächst wird zumindest ein Ausstellhebel 132 verschwenkt. Dadurch wird ein der Windschutzscheibe 129 abgewandtes Ende 135 des ersten Deckelträgers 103 in eine dritte Richtung z angehoben. Die zweite Richtung z ist quer zur ersten Richtung x ausgerichtet. Nachfolgend wird der erste Deckelträger 103 in die erste Richtung x verschoben. Hierbei ist der zweite Ausstellhebel beziehungsweise ein Schlitten 133, mit dem der Ausstellhebel 132 verbunden ist, mit der Führungsschiene 106 verriegelt. Der erste Deckelträger 103 bewegt sich relativ zum Ausstellhebel 132 in die erste Richtung x.

Die Mechanik zum Anheben und Verschieben des zweiten Deckelträgers 105 ist korrespondierend aufgebaut.

Um den ersten Deckelträger 103 in die in Figur 2B dargestellte Position zu bewegen, wird die Verriegelung des Schlittens 133 zur Führungsschiene 106 gelöst. Beispielsweise wird die Verriegelung gelöst, wenn der Antriebsschlitten 134 an den Schlitten 133 gelangt. Der Antriebsschlitten 134 wird dann zusammen mit dem Schlitten 133 und dem Ausstellhebel 132 in die erste Richtung x bewegt. Dadurch wird der Deckelträger 103 in seine endgültige Offenposition in die erste Richtung x verschoben.

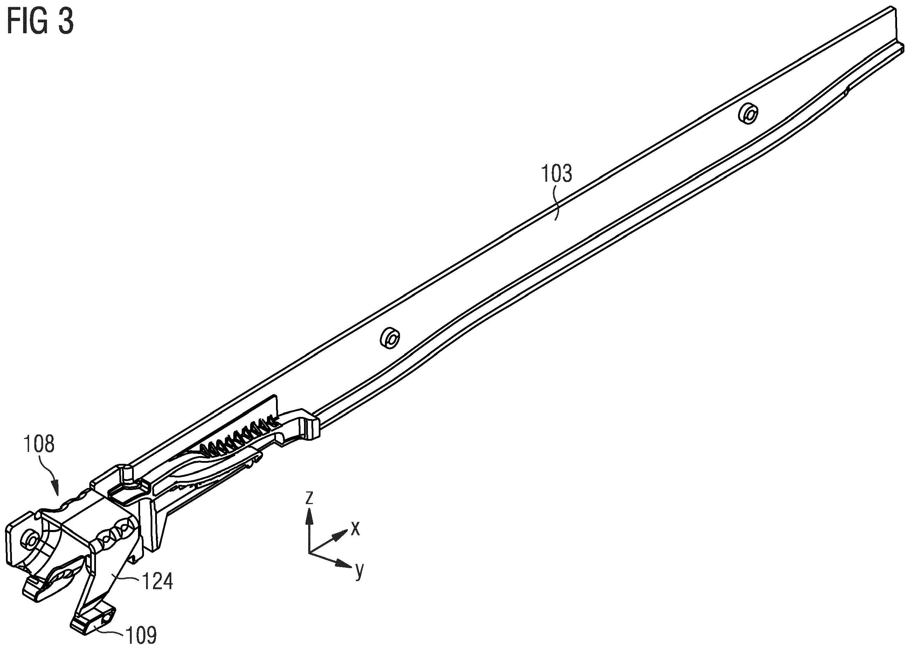

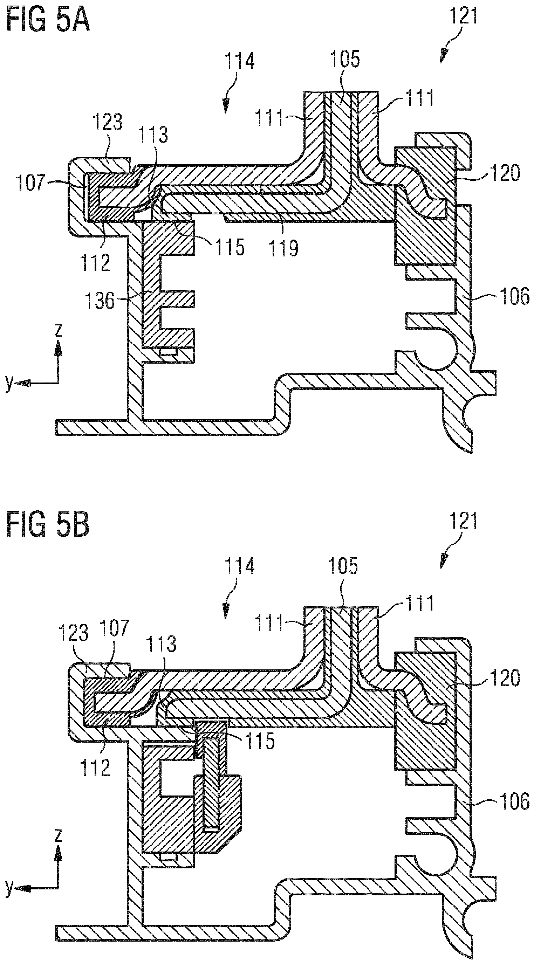

Figur 3 zeigt eine schematische Darstellung des ersten Deckelträgers 103 gemäß einer Ausführungsform. An einem der Windschutzscheibe 129 zugewandten Ende 108 weist der erste Deckelträger 103 ein vorspringendes Element 124 auf. An dem vorspringenden Element 124 ist ein erster Gleiter 109 angeordnet. Der erste Gleiter 109 wird im betriebsfertigen Zustand in einem Führungskanal 107 (Figuren 5A und 5B) der Führungsschiene 106 geführt. Der vorspringende Bereich beginnt an einem entlang der dritten Richtung z oberen Ende der ersten Führungsschiene 103. Das vorspringende Element 124 erstreckt sich dann zunächst entlang einer zweiten Richtung y. Die zweite Richtung y verläuft quer zur ersten Richtung x und zur dritten Richtung z. Dann weist das vorspringende Element 124 einen Bereich auf, der entlang der dritten Richtung z verläuft. An diesem Bereich ist der Gleiter 109 beabstandet zum Hauptkörper des ersten Deckelträgers 103 angeordnet.

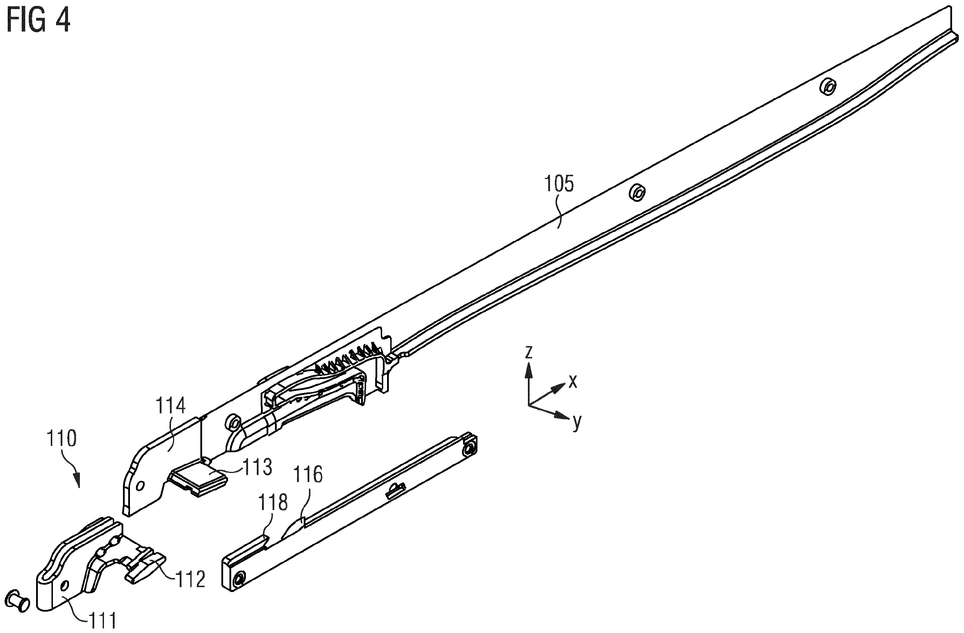

Figur 4 zeigt eine schematische Darstellung des zweiten Deckelträgers 105 gemäß Ausführungsformen. An einem ersten Ende 110 des zweiten Deckelträgers 105 ist ein dritter Gleiter 113 angeordnet. Das erste Ende 110 des zweiten Deckelträgers 105 ist der Windschutzscheibe 129 zugeordnet. Der dritte Gleiter 113 ist relativ zu dem Hauptkörper des zweiten Deckelträgers 105 unbeweglich.

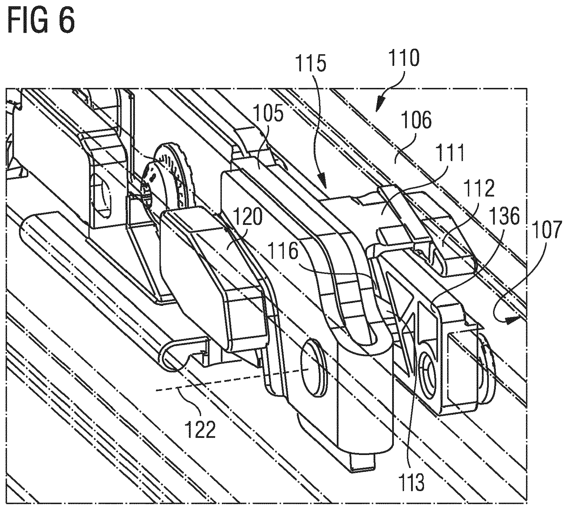

An einem Hebel 111 ist ein zweiter Gleiter 112 angeordnet. Der Hebel 111 ist im betriebsfertigen Zustand an dem ersten Ende 110 des zweiten Deckelträgers 105 befestigt. Der Hebel 111 ist relativ zu dem zweiten Deckelträger 105 bewegbar, beispielsweise um eine Drehachse 122 (Figur 6) verschwenkbar. Die Drehachse ist insbesondere entlang der zweiten Richtung y ausgerichtet. In der Schließposition des zweiten Deckels 104 ist der dritte Gleiter 113 in einer Anhebekulisse 116 der Führungsschiene 106 angeordnet. Zum Anheben der Vorderkante 126 des zweiten Deckels 104 wird der dritte Gleiter 113 in die erste Richtung x entlang der Anhebekulisse 116 verschoben und somit in die dritte Richtung z bewegt. Bei einer Bewegung entgegen der ersten Richtung x zum Schließen des zweiten Deckels 104 wird der dritte Gleiter 113 von einem Vorsprung 118 an der Anhebekulisse 116 verlässlich in die Anhebekulisse 116 eingebracht. Der Vorsprung 118 springt in die dritte Richtung z über die Anhebekulisse 116 vor.

Figuren 5A und 5B zeigen jeweils einen Querschnitt durch die Führungsschiene 106 mit dem zweiten Deckelträger 105 und dem Hebel 111.

Die Führungsschiene weist den Führungskanal 107 auf. Der Führungskanal wird von Wänden 123 der Führungsschiene 106 umgeben. In dem Führungskanal 107 ist der zweite Gleiter 112 angeordnet. In dem Führungskanal 107 ist in einer anderen Schnittebene ebenfalls der erste Gleiter 109 des ersten Deckelträgers 103 geführt.

Die Führungsschiene 106 weist eine Führungsschulter 115 auf.

Die Führungsschulter dient zum Abstützen des dritten Gleiters 113 entgegen der dritten Richtung z. Die Führungsschulter 115 und der Führungskanal 107 sind entlang der zweiten Richtung y seitlich versetzt zueinander. Die Führungsschulter 115 ist in Bezug auf die Führungsschiene 106 näher zur Mitte angeordnet als der Führungskanal 107. Der dritte Gleiter 113 ist auf einer dem Führungskanal 107 zugewandten Seite 114 des zweiten Deckelträgers 105 angeordnet. Auf einer gegenüberliegenden Seite 121 weist der zweite Deckelträger 105 insbesondere an seinem ersten Ende 110 keinen weiteren Gleiter auf.

Der Hebel 111 weist den zweiten Gleiter 112 auf, der in dem Führungskanal 107 geführt ist. Auf der Seite 121 weist der Hebel 111 einen vierten Gleiter 120 auf, der in einem weiteren Führungskanal der Führungsschiene 106 geführt ist.

Der Hebel 111 ist somit beidseitig des zweiten Deckelträgers 105 in der Führungsschiene 106 abgestützt und geführt.

Die Wände 123 umgeben den Führungskanal 107 entlang der ersten Richtung x ununterbrochen. Somit ist es möglich, sowohl den ersten Gleiter 109 des ersten Deckelträgers 103 als auch den zweiten Gleiter 112 des Hebels 111 am zweiten Deckelträger 105 in demselben Führungskanal 107 zu führen.

Die Anhebekulisse 116 für den dritten Gleiter 113 ist seitlich versetzt entlang der zweiten Richtung y neben dem Führungskanal 107 an der Führungsschulter 115 angeordnet. Die Führungsschulter 115 ist entlang der dritten Richtung z von oben zugänglich. Somit kann der Bereich des Hebels 111, an dem der zweite Gleiter 112 angeordnet ist, sich von dem Hauptkörper des zweiten Deckelträgers 105 bis zum Führungskanal 107 erstrecken. Der Hebel 111 verläuft in diesem Bereich von dem zweiten Deckelträger 105 bis zum Führungskanal 107 und somit teilweise oberhalb der Führungsschulter 115.

Wie sich aus Figur 5A ergibt, ist die Führungsschulter in einem Bereich, der sich unmittelbar an die Anhebekulisse 116 anschließt, von einem Element 136 gebildet, in dem auch die Anhebekulisse 116 ausgebildet ist. Die Führungsschulter 115 ist in diesem Bereich beispielsweise durch einen Kunststoffeinsatz gebildet, der in die übrige Führungsschiene 106 eingesetzt ist. Die übrige Führungsschiene ist beispielsweise ein Strangpressprofil aus einem Metall.

Figur 5B zeigt einen weiteren Querschnitt, der in der ersten Richtung x hinter dem Querschnitt der Figur 5A liegt. In der ersten Richtung x hinter dem Element 136, ist die Führungsschulter 115 von einem Bereich der Führungsschiene 106 unmittelbar ausgebildet. Während der Bewegung in die erste Richtung x liegt der dritte Gleiter 113 zunächst auf dem Bereich der Führungsschulter 115, der von dem Element 136 ausgebildet ist und beispielsweise aus einem Kunststoff ist. Nachfolgend liegt der dritte Gleiter 113 auf dem Bereich der Führungsschulter 115, der von der Führungsschiene selbst ausgebildet ist und beispielsweise aus einem Metall ist. In diesem Bereich weisen der Führungskanal 107 und die Führungsschulter 115 insbesondere einen gemeinsamen Boden auf.

Wenn der dritte Gleiter 113 aus der Anhebekulisse 116 geführt ist und entlang der Führungsschulter 115 geführt wird, weisen der zweite Gleiter 112 und der dritte Gleiter 113 eine gemeinsame Kontaktfläche 119 auf. Die gemeinsame Kontaktfläche verläuft in etwa entlang der x-z-Ebene. Somit ist der dritte Gleiter 113 sowohl in als auch entgegen der dritten Richtung z abgestützt.

Figur 6 zeigt einen Ausschnitt der Anordnung 100 am ersten Ende 110 des zweiten Deckelträgers 105 in einem Zustand, der der Schließposition des zweiten Deckels 104 zugeordnet ist. Der dritte Gleiter 113 ist in der Anhebekulisse 116 angeordnet. Der zweite Gleiter 112 ist in dem Führungskanal 107 angeordnet. Der zweite Gleiter 112 und der dritte Gleiter 113 sind entlang der dritten Richtung z beabstandet zueinander angeordnet.

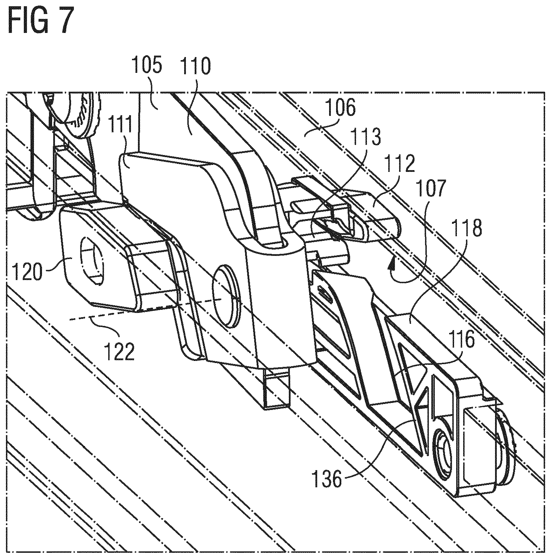

Figur 7 zeigt den Ausschnitt der Anordnung 100 im Bereich der Anhebekulisse 116, am Anfang der Verschiebebewegung des zweiten Deckels 104 in die erste Richtung x. Der dritte Gleiter 113 ist aus der Anhebekulisse 116 in die dritte Richtung z bewegt worden und auf der Führungsschulter 115 angeordnet. Der dritte Gleiter 113 ist in Kontakt mit dem zweiten Gleiter 112 gelangt. Durch die Bewegung des dritten Gleiters 113 entlang der Anhebekulisse 116 in die erste Richtung x ist das erste Ende 110 des zweiten Deckelträgers 105 in die dritte Richtung z bewegt worden und somit die Vorderkante 126 des zweiten Deckels 104 in die dritte Richtung z bewegt worden. Der Hebel 111 ist somit relativ zum zweiten Deckelträger 105 um die Drehachse 122 verschwenkt worden. Somit wird die Relativbewegung des dritten Gleiters 113 zum zweiten Gleiter 112 ermöglicht.

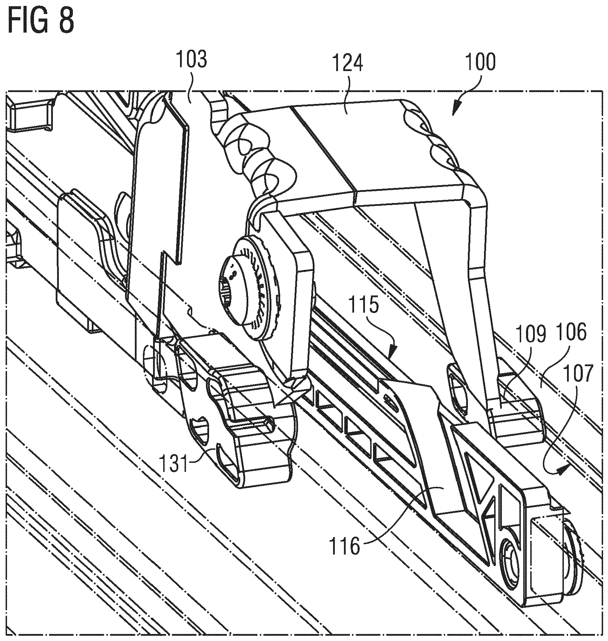

Figur 8 zeigt den Ausschnitt der Anordnung 100 im Bereich der Anhebekulisse 116, wenn das vordere Ende 108 des ersten Deckelträgers 103 an der Anhebekulisse 116 vorbeifährt. Der erste Gleiter 109 des ersten Deckelträgers 103 fährt entlang dem gleichen Führungskanal 107, in dem zuvor der zweite Gleiter 112 des Hebels 111 angeordnet war. Die Anhebekulisse 116 und die Führungsschulter 115 sind entgegen der zweiten Richtung y neben dem Führungskanal 107 angeordnet. Der erste Gleiter 109 des ersten Deckelträgers 103 kann somit an der Anhebekulisse 116 vorbeifahren. Ein Risiko, dass der erste Gleiter 109 unbeabsichtigt in die Anhebekulisse 116 für den dritten Gleiter 113 absinkt, kann somit vermieden werden. Auf einer dem ersten Gleiter 109 gegenüberliegenden Seite in Bezug auf die Führungsschulter 115 ist an dem ersten Deckelträger 103 ein weiterer Gleiter 131 angeordnet. Die Führungsschulter 115 und die Anhebekulisse 116 sind somit entlang der zweiten Richtung y zwischen dem ersten Gleiter 109 und dem weiteren Gleiter 131 des ersten Deckelträgers 103 angeordnet.

Der Hebel 111 ist mittels des Gleiters 112 in dem Führungskanal 107 seitlich geführt, der bereits zum Führen des ersten Gleiters 109 des ersten Deckelträgers 103 an der Führungsschiene 106 vorhanden ist. Der Hebel 111 hält den zweiten Deckelträger 105 während der Verschiebung entlang der ersten Richtung x nach oben in die dritte Richtung. Durch die anmeldungsgemäße Anordnung 100 wird ermöglicht, dass der Führungskanal 107 sowohl von dem ersten Gleiter 109 des ersten Deckelträgers 103 als auch von dem zweiten Gleiter 112 genutzt wird, der dem zweiten Deckelträger 105 zugeordnet ist. Somit wird eine Minimierung der Baubreite entlang der zweiten Richtung y ermöglicht, bei der Anordnung 100, die zwei ausstell- und verschiebbare Deckel 102 und 104 aufweist.

Beide ausstell- und verschiebbare Deckel 102 und 104 werden in einer gemeinsamen Führungsschiene 106 geführt. Die Führungsschiene 106 ist nicht in zwei oder mehr separate Teile unterbrochen, die den jeweiligen Deckeln zugeordnet wären.

## Patentansprüche

1. Anordnung (100) für ein Fahrzeugdach (101), aufweisend:
- einen ersten Deckel (102) mit einem ersten Deckelträger (103),
- einen zweiten Deckel (104) mit einem zweiten Deckelträger (105), wobei der zweite Deckel (104) in einer Schließposition in einer ersten Richtung (x) hinter dem ersten Deckel (102) angeordnet ist,
- eine Führungsschiene (106) mit einem Führungskanal (107), wobei der erste (102) und der zweite (104) Deckel jeweils entlang der ersten Richtung (x) relativ zu der Führungsschiene (106) verschiebbar sind, wobei:
- der erste Deckelträger (103) an einem dem zweiten Deckel (104) abgewandten Ende (108) einen ersten Gleiter (109) aufweist, der in dem Führungskanal (107) geführt ist, **dadurch gekennzeichnet, dass**
- der zweite Deckelträger (105) an einem dem ersten Deckel (102) zugewandten ersten Ende (110) einen Hebel (111) mit einem zweiten Gleiter (112) aufweist, der in dem Führungskanal (107) geführt ist, wobei der Hebel (111) relativ zum zweiten Deckelträger (105) bewegbar ist.

2. Anordnung nach Anspruch 1, bei der der zweite Deckelträger (105) an dem ersten Ende (110) einen dritten Gleiter (113) aufweist, der an einer dem Führungskanal (107) zugewandten Seite (114) des zweiten Deckelträgers (105) angeordnet ist.

3. Anordnung nach Anspruch 2, bei der die Führungsschiene (106) eine Führungsschulter (115) aufweist, auf der der dritter Gleiter (113) zumindest abschnittsweise geführt ist, wobei die Führungsschulter (115) und der Führungskanal (107) entlang einer zweiten Richtung (y) seitlich versetzt zueinander angeordnet sind.

4. Anordnung nach Anspruch 3, bei der die Führungsschiene (106) eine Anhebekulisse (116) für den dritten Gleiter (113) aufweist, die an einem dem ersten Deckel (102) zugewandten Ende der Führungsschulter (115) angeordnet ist.

5. Anordnung nach Anspruch 4, bei der die Anhebekulisse (116) einen Vorsprung (118) aufweist, der in eine dritte Richtung (z) über die Führungsschulter (115) vorspringt, um den dritten Gleiter (113) bei einer Bewegung entgegen der ersten Richtung (x) in die Anhebekulisse (116) zu führen.

6. Anordnung nach einem der Ansprüche 3 bis 5, bei der die Führungsschiene (106) so ausgestaltet ist, dass die Führungsschulter (115) entgegen der dritten Richtung (z) von oben zugänglich ist.

7. Anordnung nach einem der Ansprüche 3 bis 6, bei der der erste Deckelträger (103) ein vorspringendes Element (124) aufweist, das entlang der dritten Richtung (z) beabstandet zu der Führungsschulter (115) ist und sich entlang der zweiten Richtung (y) über die Führungsschulter (115) erstreckt, wobei der erste Gleiter (109) an dem vorspringendem Element (124) angeordnet ist.

8. Anordnung nach einem der Ansprüche 2 bis 7, bei der der zweiter Gleiter (112) und der dritte Gleiter (113) in einem ersten Zustand eine gemeinsame Kontaktfläche (119) aufweisen und in einem zweiten Zustand beabstandet voneinander angeordnet sind.

9. Anordnung nach einem der Ansprüche 1 bis 8, bei der der Hebel (111) einen vierten Gleiter (120) aufweist, der auf einer dem Führungskanal (107) abgewandten Seite (121) des Hebels (111) angeordnet ist.

10. Anordnung nach einem der Ansprüche 1 bis 9, bei der der Hebel (111) relativ zum zweiten Deckelträger (105) um eine Drehachse (122) verschwenkbar ist.

11. Anordnung nach einem der Ansprüche 1 bis 9, bei der Wände (123) der Führungsschiene (106) durchgängig sind, die den Führungskanal (107) entlang der dritten Richtung (z) nach oben und unten begrenzen.

## Claims

1. Assembly (100) for a vehicle roof (101), having:
- a first cover (102) with a first cover carrier (103),
- a second cover (104) with a second cover carrier (105), wherein, in a closed position, the second cover (104) is arranged behind the first cover (102) in a first direction (x),
- a guide rail (106) with a guide channel (107), wherein the first cover (102) and the second cover (104) can each be displaced relative to the guide rail (106) in the first direction (x), wherein:
- on an end (108) facing away from the second cover (104), the first cover carrier (103) has a first slider (109), which is guided in the guide channel (107), **characterized in that**,
- on a first end (110) facing towards the first cover (102), the second cover carrier (105) has a lever (111) with a second slider (112), which is guided in the guide channel (107), wherein the lever (111) can be moved relative to the second cover carrier (105).

2. Assembly according to Claim 1, in which, on the first end (110), the second cover carrier (105) has a third slider (113), which is arranged on a side (114), facing towards the guide channel (107), of the second cover carrier (105).

3. Assembly according to Claim 2, in which the guide rail (106) has a guide shoulder (115), on which the third slider (113) is guided at least in certain portions, wherein the guide shoulder (115) and the guide channel (107) are arranged in a laterally offset manner with respect to one another in a second direction (y).

4. Assembly according to Claim 3, in which the guide rail (106) has a slotted lifting guide (116) for the third slider (113), which slotted lifting guide is arranged on an end, facing towards the first cover (102), of the guide shoulder (115).

5. Assembly according to Claim 4, in which the slotted lifting guide (116) has a projection (118), which projects over the guide shoulder (115) in a third direction (z), in order to guide the third slider (113) into the slotted lifting guide (116) in the event of a movement counter to the first direction (x).

6. Assembly according to one of Claims 3 to 5, in which the guide rail (106) is configured such that the guide shoulder (115) can be accessed from above counter to the third direction (z).

7. Assembly according to one of Claims 3 to 6, in which the first cover carrier (103) has a projecting element (124), which is spaced apart from the guide shoulder (115) in the third direction (z) and extends over the guide shoulder (115) in the second direction (y), wherein the first slider (109) is arranged on the projecting element (124).

8. Assembly according to one of Claims 2 to 7, in which the second slider (112) and the third slider (113), in a first state, have a common contact surface (119) and, in a second state, are arranged in a manner spaced apart from one another.

9. Assembly according to one of Claims 1 to 8, in which the lever (111) has a fourth slider (120), which is arranged on a side (121), facing away from the guide channel (107), of the lever (111).

10. Assembly according to one of Claims 1 to 9, in which the lever (111) can be pivoted relative to the second cover carrier (105) about an axis of rotation (122).

11. Assembly according to one of Claims 1 to 9, in which walls (123) of the guide rail (106) which delimit the guide channel (107) upwardly and downwardly in the third direction (z) are continuous.

## Revendications

1. Agencement (100) pour un toit de véhicule (101), comprenant :
- un premier couvercle (102) comprenant un premier support de couvercle (103),
- un deuxième couvercle (104) comprenant un deuxième support de couvercle (105), le deuxième couvercle (104) étant agencé, dans une position de fermeture, derrière le premier couvercle (102) dans une première direction (x),
- un rail de guidage (106) comprenant un canal de guidage (107), le premier (102) et le deuxième (104) couvercle étant respectivement déplaçables par rapport au rail de guidage (106) le long de la première direction (x),
- le premier support de couvercle (103) comprenant, à une extrémité (108) opposée au deuxième couvercle (104), un premier coulisseau (109) qui est guidé dans le canal de guidage (107),
**caractérisé en ce que**
- le deuxième support de couvercle (105) comprend, à une première extrémité (110) tournée vers le premier couvercle (102), un levier (111) doté d'un deuxième coulisseau (112) qui est guidé dans le canal de guidage (107), le levier (111) étant mobile par rapport au deuxième support de couvercle (105).

2. Agencement selon la revendication 1, dans lequel le deuxième support de couvercle (105) comprend à la première extrémité (110) un troisième coulisseau (113), qui est agencé sur un côté (114) du deuxième support de couvercle (105) tourné vers le canal de guidage (107).

3. Agencement selon la revendication 2, dans lequel le rail de guidage (106) comprend un épaulement de guidage (115), sur lequel le troisième coulisseau (113) est guidé au moins en sections, l'épaulement de guidage (115) et le canal de guidage (107) étant agencés décalés latéralement l'un de l'autre le long d'une deuxième direction (y).

4. Agencement selon la revendication 3, dans lequel le rail de guidage (106) comprend une coulisse de levage (116) pour le troisième coulisseau (113), qui est agencée à une extrémité de l'épaulement de guidage (115) tournée vers le premier couvercle (102).

5. Agencement selon la revendication 4, dans lequel la coulisse de levage (116) comprend une saillie (118), qui est en saillie dans une troisième direction (z) au-dessus de l'épaulement de guidage (115), afin de guider le troisième coulisseau (113) lors d'un mouvement contre la première direction (x) dans la coulisse de levage (116).

6. Agencement selon l'une quelconque des revendications 3 à 5, dans lequel le rail de guidage (106) est configuré de telle sorte que l'épaulement de guidage (115) est accessible contre la troisième direction (z) depuis le haut.

7. Agencement selon l'une quelconque des revendications 3 à 6, dans lequel le premier support de couvercle (103) comprend un élément en saillie (124), qui est espacé de l'épaulement de guidage (115) le long de la troisième direction (z) et s'étend le long de la deuxième direction (y) au-dessus de l'épaulement de guidage (115), le premier coulisseau (109) étant agencé sur l'élément en saillie (124).

8. Agencement selon l'une quelconque des revendications 2 à 7, dans lequel le deuxième coulisseau (112) et le troisième coulisseau (113) présentent dans un premier état une surface de contact commune (119) et sont agencés espacés l'un de l'autre dans un deuxième état.

9. Agencement selon l'une quelconque des revendications 1 à 8, dans lequel le levier (111) comprend un quatrième coulisseau (120), qui est agencé sur un côté (121) du levier (111) opposé au canal de guidage (107).

10. Agencement selon l'une quelconque des revendications 1 à 9, dans lequel le levier (111) est pivotant par rapport au deuxième support de couvercle (105) autour d'un axe de rotation (122).

11. Agencement selon l'une quelconque des revendications 1 à 9, dans lequel des parois (123) du rail de guidage (106) sont continues, qui délimitent le canal de guidage (107) le long de la troisième direction (z) vers le haut et le bas.
